# EUROPÄISCHE PATENTSCHRIFT

(11) **EP 0 429 084 B1**
(45) Veröffentlichungstag und Bekanntmachung des Hinweises auf die Patenterteilung: **14.12.1994**
(21) Anmeldenummer: 90122374.3
(22) Anmeldetag: 23.11.1990
(51) Int. Cl.: F16F 1/36, F16F 1/42, B62D 33/06

(54) **Elastische Kabinenlagerung für Fahrzeuge**
Elastic support for vehicle cabins
Support élastique pour la cabine de véhicule

(30) Priorität: 24.11.1989 DE 3938962
(43) Veröffentlichungstag der Anmeldung: 29.05.1991
(73) Patentinhaber: SAME S.p.A., I-24047 Treviglio (Bergamo) (IT)
(72) Erfinder: Komp, Hermann-Josef, Dipl.-Ing., W-5000 Köln 80 (DE); Ippen, Heiko, W-5000 Köln 90 (DE); Kramer, Peter, W-5210 Troisdorf-Spich (DE); Thomsen, Klaus, W-5000 Köln 90 (DE)
(74) Vertreter: Nau, Walter, Dipl.-Ing.

(56) Entgegenhaltungen:
- FR-A- 1 085 152
- GB-A- 549 598
- GB-A- 1 459 671
- GB-A- 2 168 656
- US-A- 2 018 860
- US-A- 2 147 660
- US-A- 2 830 780
- US-A- 3 831 923

## Beschreibung

Die Erfindung betrifft eine elastische Lagerung für eine Fahrerkabine nach dem Oberbegriff des Patentanspruchs 1.

Heute eingesetzte land- und bauwirtschaftliche Fahrzeuge werden überwiegend mit geschlossenen und auf Gummilagern aufgesetzte Kabinen versehen. Die Kabinen erhöhen die Sicherheit des Fahrers beim Umsturz des Fahrzeugs, bieten einen Wetterschutz und sollen die vom Fahrzeug direkt bzw. von den damit angekoppelten Geräten verursachten Geräuschquellen am Fahrerohr reduzieren.

Aus dem Fachbuch "Traktoren", Verfasser K.T. Renius, BLV-Verlagsgesellschaft München aus dem Jahr 1985, ist auf Seite 135, Bild Nr. 165, die Gestaltung eines elastischen Gummilagers zur körperschallisolierenden Abstützung einer Traktorkabine zu entnehmen. Eine solche Lagerung verlangt eine relativ große Bauhöhe in vertikaler Richtung und besitzt aufgrund der harten Dämpfung keine ausreichende Reduzierung der Körperschallisolierung. Weiter bietet diese Lagerung keine Möglichkeit, Querschwingungen, die auf die Fahrerkabine einwirken, zu dämpfen, die insbesondere durch das grobstollige Profil der Reifen bei landwirtschaftlichen Traktoren hervorgerufen werden.

Die Druckschrift FR-A-1 085 152 zeigt den Stand der Technik gemäß oberbegriff des Anspruchs 1.

Die der Erfindung zugrundeliegende Aufgabe besteht darin, eine Lagerung in kompakter Bauweise mit hoher Dauerfestigkeit, bei kostengünstiger Fertigung darzustellen, die die Nachteile bekannter Lagerungen vermeidet und den Fahrkomfort erhöht.

Mit der vorgestellten Erfindung wird vorteilhaft eine Kabinenlagerung dargestellt, mit der für einen kleinen Bereich eine möglichst weiche Lagerung erzielt wird, die sich vorteilhaft bei Straßenfahrt bewährt. Ein nachteilig "schwammiger" Eindruck der Kabinenlagerung wird, jedoch vermieden, da der weiche Bereich einen nur geringen Federweg besitzt, der sich folglich auch nicht beim Einstieg des Fahrers in die Kabine nachteilig auswirkt. Die Gestaltung des Isolators in Verbindung der Metalleinfassungen ergibt vorteilhaft zwei unterschiedliche Kennlinien, eine vertikale und eine horizontale Kennlinie, die optimal auf die Schwingungsanregungen von Fahrerkabinen für Ackerschlepper abgestimmt werden kann.

Die erfindungsgemäße Gestaltung des Dämpfungsgliedes in Form eines Isolators, der im eingebauten Zustand eine scheibenförmige Ausbildung besitzt und damit im wesentlichen eine radiale Erstreckung aufweist, benötigt vorteilhaft nur einen geringen Bauraum in vertikaler Richtung.

Der Isolatoraufbau sieht vorteilhaft einen Axialversatz im mittleren Bereich vor, der sich radial über den Bereich der zentrisch eingesetzten Buchse erstreckt. Die Längserstreckung einer Buchse bestimmt die Vorspannung des Isolators im eingebauten Zustand, so daß der Axial-Versatz des Isolators beeinflußt wird und es folglich zu gewollten Verdichtungen im Gewebe des elastischen Isolators kommt. Die weitere radial eingesetzte Metalleinfassung ist erfindungsgemäß in den zur Buchse versetzten Abschnitt des Isolators eingebracht. Im eingebauten Zustand ergibt sich dadurch eine Anordnung der radialen Metalleinfassung in dem Bereich des Isolators, der im Vergleich zur Buchse weniger Dämpfungsmasse besitzt. Die Formgebung des Isolators in Verbindung mit den Metalleinfassungen bewirkt in vertikaler Richtung eine vorteilhafte in Grenzen sehr weiche Federcharakteristik und eine angepaßte Isolation bei horizontaler Schwingungsanregung aufgrund der größeren Dämpfungsmasse. Vorteilhaft bietet es sich an, die Metalleinfassungen fest mit dem Werkstoff des Isolators zu verbinden, beispielsweise durch Vulkanisieren.

In erfindungsgemäßer Weiterbildung ist vorgesehen zur Erreichung einer nahezu gleichbleibenden Isolatorhöhe über die gesamte Strecke, daß im Übergangsbereich des Axialversatzes, der den Isolator in ein Unter- und ein Oberteil ausbildet, Radien auf beiden Seiten des Isolators vorzusehen, die aufeinander abgestimmt sind zur Erreichung einer weitestgehend gleichen Bauhöhe des Isolators über die gesamte Längserstreckung im nicht eingebauten Zustand. Die Anbringung größtmöglicher Radien bietet weiter den Vorteil, daß Spannungsspitzen insbesondere im Übergangsbereich des Isolators vermieden werden. Eine gleiche Funktion besitzen die beidseitig radial neben der Buchse im Isolator eingebrachten Radien.

In dem Isolator wird im nicht eingebauten Zustand durch den Axialversatz eine Ausnehmung gebildet, die sich im Unterteil radial bis über die Außenkontur der Buchse erstreckt und damit eine definierte Isolatorgestaltung erreichbar ist zur Darstellung der gewünschten Dämpfungscharakteristik.

Die Formgebung des Isolators bewirkt im eingebauten, mit dem Gewicht der Kabine belasteten Zustand der Lagerung einen im Vergleich der bei den Anlageflächen voneinander unterschiedlichen Verlauf der Außenkonturen, die jeweils einen Kontaktbereich aufweisen, von dem ausgehend sich in Richtung radialer Außenkontur eine Verjüngung ergibt, wodurch sich ein Luftspalt zwischen dem Isolator und dem unmittelbar daran anliegenden Bauteil einstellt. Vorteilhaft haben sich als Maß für den Luftspalt von zwei bis drei Millimeter auf der zur Kabine gerichteten Seite des Isolators bewährt und Luftspaltmaße von zwei bis drei Millimetern auf der der Kabine abgewandten Seite.

Durch die vorliegende Neuerung wird eine im Aufbau einfache Lagerung vorgestellt, die darüber hinaus kostengünstig darstellbar ist und die zur erheblichen Steigerung des Fahrkomforts führt. Die erfindungsgemäße und zuvor beschriebene Gestaltung des Isolators realisiert eine Dämpfungscharakteristik für die Kabinenlagerung, die in vertikaler Richtung eine weiche Federkennlinie besitzt, d.h. für den Fahrzeugeinsatz bei Straßenfahrt oder bei stehendem Fahrzeug bis zur Überwindung des Luftspaltes. Eine solche Belastung beansprucht den Isolator fast ausschließlich auf Schub, was erfahrungsgemäß die Körperschallisolierung vorteilhaft steigert. Bei einer größeren Einfederung der Lagerung, d.h. Überwindung des Luftspalts, stellt sich eine sehr progressive Federkennlinie der Dämpfung ein zur Vermeidung großer Federwege und dem damit häufig verbundenen Anschlagpoltern des Isolators.

Vorteilhaft ist ein Werkstoff für den Isolator ausgewählt, beispielsweise eine Gummimischung aus Naturkautschuk, die eine Shore-Härte von 40 +/- 5 ShA aufweist. Ein solcher Werkstoff in Verbindung mit der zuvor beschriebenen Gestaltung der Lagerung bewirkt die erfindungsgemäße, progressive Charakteristik, mit der das Lager durch eine Belastung in vertikaler Richtung die Hälfte des maximalen Deformationsweges vom Isolator bereits unterhalb einer 25prozentigen Lagerbelastung erreicht.

Durch die Wahl einer geringen Härte des elastischen Dämpfungsmaterials sind vorteilhaft kleine Federsteifigkeiten der elastischen Kabinenlagerungen erzielbar. Als Folge stellen sich beachtliche Geräuschpegelverbesserungen ein von bis zu 3 dB(A) im Vergleich zu bisherigen Lösungen. Der Lageraufbau bewirkt weiter einen extremen Abbau der subjektiv unangenehmen Frequenzanteile im Geräuschspektrum.

Erfindungswesentlich ist weiter die Fähigkeit der vorgestellten elastischen Lagerung, eine horizontale Anregung der Kabine, die bei landwirtschaftlichen Traktoren durch das grobstollige Reifenprofil hervorgerufen wird, zu isolieren. Die horizontale Kennlinie der gesamten Lagerung ist durch die große und verdichtete Isolatorsubstanz zwischen dem fahrgestellfesten und dem kabinenfesten Teil der erfindungsgemäßen Lagerung im Vergleich zu bekannten Ausführungen sehr flach. Folglich ist die Resonanzfrequenz in horizontaler Richtung abgesenkt bis zu einem Wert von ca. 10 Hz, wodurch die durch das grobstollige Reifenprofil hervorgerufenen Schwingungen isoliert werden.

In einer Ausgestaltung der Erfindung ist vorgesehen, daß in Richtung Fahrerkabine der Isolator von der schalenförmig ausgebildeten Lagerplatte umgeben ist, die sich - mit Ausnahme des sich zum Außenumfang hin verjüngenden Abschnittes des Isolators - der Außenkontur weitestgehend anpaßt. Der Lagerplatte gegenüberliegend liegt am Isolator die Anschlagscheibe an. Diese Bauteile gemeinsam mit der zentrisch im Isolator eingesetzten Buchse formen den Isolator im eingebauten Zustand und beeinflussen bzw. begrenzen die Einfederung. Durch die Lagerplatte wird bei einer Einfederung, die den Wert des Luftspalts überschreitet, der Isolator von der schalenförmig ausgebildeten Lagerplatte umschlossen mit einer Steigerung der Federsteifigkeit bis zur Erreichung eines inkompressiblen Lagers. Die beidseitigen Metalleinfassungen des Isolators sind weiter förderlich zur Erreichung der zuvor beschriebenen horizontalen Kennlinie. Die Anschlagscheibe, deren Außendurchmesser den Innendurchmesser der in dem Isolator eingesetzten Befestigungsplatte überragt, besitzt, neben der Stützwirkung des Isolators, weiter die Aufgabe, bei einem Überschlag des Fahrzeugs ein Ausreißen der die Lagerung haltenden Verschraubung aus dem Isolator zu vermeiden.

Die erfindungsgemäße elastische Lagerung sieht in einer weiteren Ausgestaltung vor, den kabinenseitigen Teil der Lagerung durch eine Schraubverbindung starr mit der Fahrerkabine zu koppeln. Ebenfalls durch eine Verschraubung sind die fahrzeug- bzw. rumpffesten Bauteile starr miteinander verbunden.

Die Vielseitigkeit der vorgestellten Erfindung unterstreichend ist die vorgestellte Lagerung auch bei bereits im Einsatz befindlichen Fahrzeugen nachrüstbar, wodurch auch eine Einbaukompatibilität gewährleistet ist.

Versuche zeigten, daß keine unangenehmen Stöße und Vibrationen über die erfindungsgemäße Kabinenlagerung auf den Fahrer übertragen werden. Ebenso wurden beim Durchfahren von Schlaglöchern und Bodenwellen keine metallischen Anschläge und Poltergeräusche von der Kabinenlagerung übertragen bzw. von dieser verursacht.

Zur weiteren Erläuterung der Erfindung können die Zeichnungen herangezogen werden, die ein Ausführungsbeispiel der Erfindung darstellen.

Es zeigt:
- Fig. 1:: die erfindungsgemäße Kabinenlagerung im eingebauten Zustand,
- Fig. 2:: die Einzelteilzeichnung des Isolators mit den Metalleinfassungen im Schnitt gemäß Fig 3,
- Fig. 3:: den Isolator in der Draufsicht,
- Fig. 4:: die Federcharakteristik des erfindungsgemäßen Lagers bei vertikaler Belastungsrichtung,
- Fig. 5:: die Federcharakteristik bei einer Queranregung des Lagers.

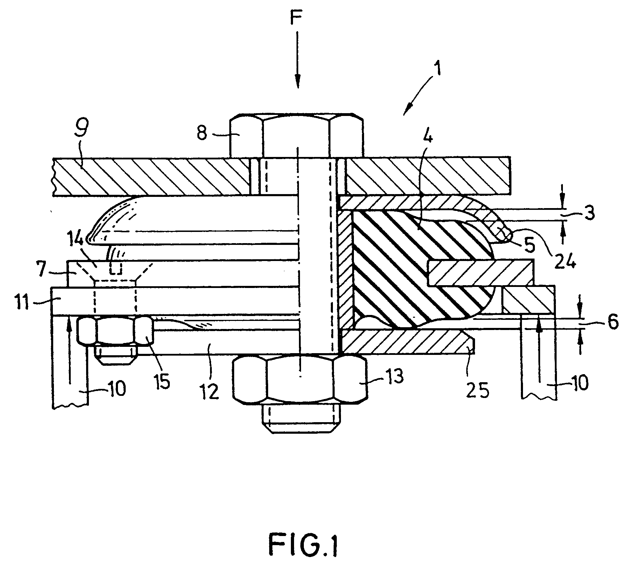

Ein Ausführungsbeispiel der erfindungsgemäßen Kabinenlagerung im eingebauten Zustand zeigt die Figur 1. Die Lagerung 1 ist im eingebauten Zustand unterhalb eines Rahmenteils der teilweise dargestellten Fahrerkabine 9 angeordnet und durch die Sechskantschraube 8 mit der dazugehörigen Sechskantmutter 13 lösbar mit der Fahrerkabine verschraubt. Als Dämpfungsglied besitzt das Lager 1 den Isolator 4, der als Rundkörper ausgebildet und zentrisch mit einer Buchse 16 versehen ist, deren Innendurchmesser dem Schaft der Sechskantschraube 8 angepaßt ist.

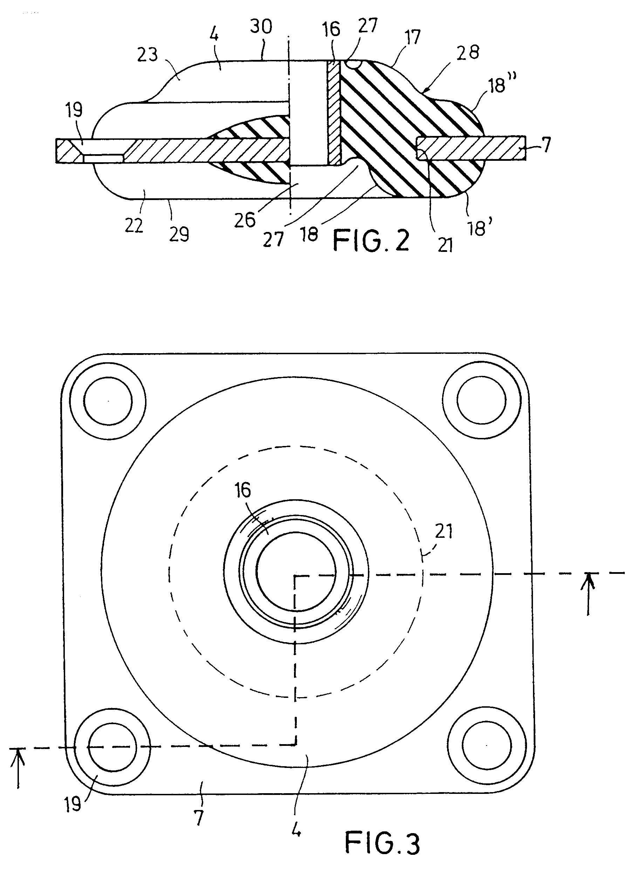

Weiter ist der Isolator 4 mit einer Befestigungsplatte 7 versehen, die eine quadratische Außenkontur besitzt und einen Innendurchmesser 21 aufweist (siehe Fig. 2), der kleiner ist als die Außenkontur des Isolators 4. Die Befestigungsplatte 7 ist folglich in den Isolator 4 eingesetzt und von diesem in Richtung Innendurchmesser 21 beidseitig umgeben. Weiter ist die Lagerung 1 versehen mit einer Lagerplatte 5, die sich zwischen der Fahrerkabine 9 und dem Isolator 4 befindet und schalenförmig ausgebildete Abschnitte der oberen Hälfte des Isolators 4 umschließt, wobei der Außenrand der Lagerplatte 5 mit einer Abwinkelung 24 versehen ist. Gegenüberliegend von der Lagerplatte 5 ist die Anschlagscheibe 12 am Isolator 4 angelegt, die als gradlinige Rundscheibe ausgebildet ist und auf der zum Isolator 4 gerichteten Seite eine umlaufende Anfassung 25 aufweist. Gemäß dem in Fig. 1 dargestellten Einbaubeispiel werden die Einzelteile der Lagerung 1, die Lagerplatte 5, der Isolator 4 und die Anschlagscheibe 12 durch die Verschraubung, bestehend aus der Sechskantschraube 8 und der Sechskantmutter 13, mit der Fahrerkabine 9 starr verschraubt. Wie bei einem Vergleich der Figuren 1 und 2 ersichtlich, werden Bereiche des Isolators 4 im eingebauten Zustand verspannt bzw. komprimiert auf das Längenmaß der Buchse 16. Die Krafteinleitung (dargestellt durch den Pfeil mit dem Buchstaben "F") in die Lagerung 1 erfolgt über den Isolator 4 und die Befestigungsplatte 7 in das Fahrgestell 10 bzw. den Rumpf des Traktors. Gemäß dem Ausführungsbeispiel der Fig. 1 ist eine Auflage 11 vorgesehen, die zwischen dem Fahrgestell 10 und der Befestigungsplatte 7 eingesetzt ist, die mit mehreren Senkkopfschrauben 14 und den dazugehörigen Sechskantmuttern 15 mit der Befestigungsplatte 7 verschraubt ist.

In der Figur 2 ist der Isolator 4 im nicht eingebauten Zustand dargestellt, der im wesentlichen gebildet wird aus dem Unterteil 22 und dem Oberteil 23, die gemeinsam ein rotationssymmetrisches Bauteil darstellen. Wie bereits angemerkt ist das Unterteil 22 mit der Befestigungsplatte 7 unlösbar verbunden, wobei die Befestigungsplatte 7 auf der horizontalen Mittenachse des Unterteils 22 angeordnet ist. Zentrisch um die Vertikalachse unterhalb der Buchse 16 besitzt der Isolator 4 eine Ausnehmung 26, die radial bis über die Außenkontur der Buchse 16 reicht und deren Übergang zur horizontalen Auflagefläche des Unterteils 22 stark gerundet entsprechend einem Radius 18 ausgebildet ist. Übereinstimmend mit dem Radius 18 ist ebenfalls die radiale Außenkontur des Unterteils 22 beidseitig geformt (Ausbildung gemäß der Radien 18' unterhalb der Befestigungsplatte 7 bzw. 18'' oberhalb der Befestigungsplatte 7). Der Übergang von der radialen Außenkontur des Unterteils 22 zur Auflagefläche des Oberteils 23 ist ebenfalls stark gerundet, wobei ein Versatz des Oberteils 23 in Richtung Buchse 16 erreicht wird durch einen Wechsel von einem Innen- zu einem Außenradius. Der Verlauf der Außenkontur sieht im Anschluß an den Radius 18'' einen Außenradius 28 vor, an den sich ein Innenradius 17 anschließt als Übergang zur Auflagefläche des Oberteils 23. Deutlich zeigt die Fig. 2, daß die Radien 17 und 28 vom Wert her gleich, jedoch größer als die Radien 18, 18', 18'' ausgebildet sind. Zur Vermeidung eines scharfkantigen Übergangs zwischen der beispielsweise einvulkanisierten Buchse 16 und dem aus einem elastischen Material gebildeten Isolator 4 ist ein Radius 27 vorgesehen.

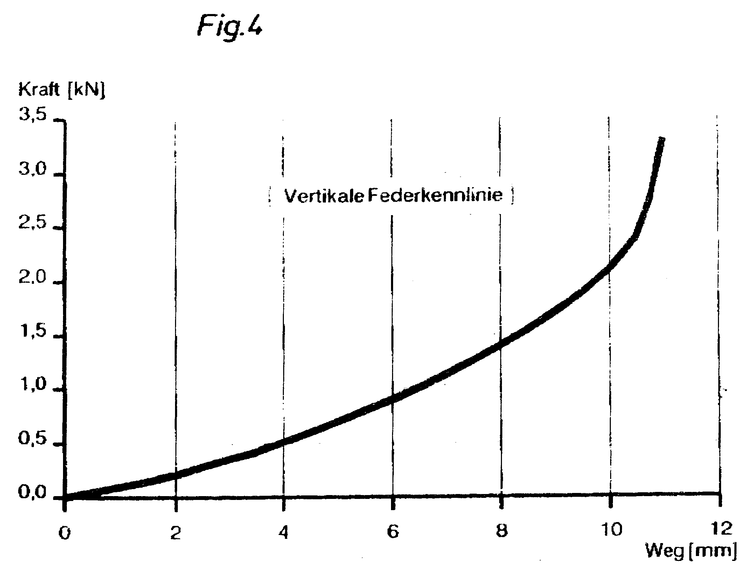

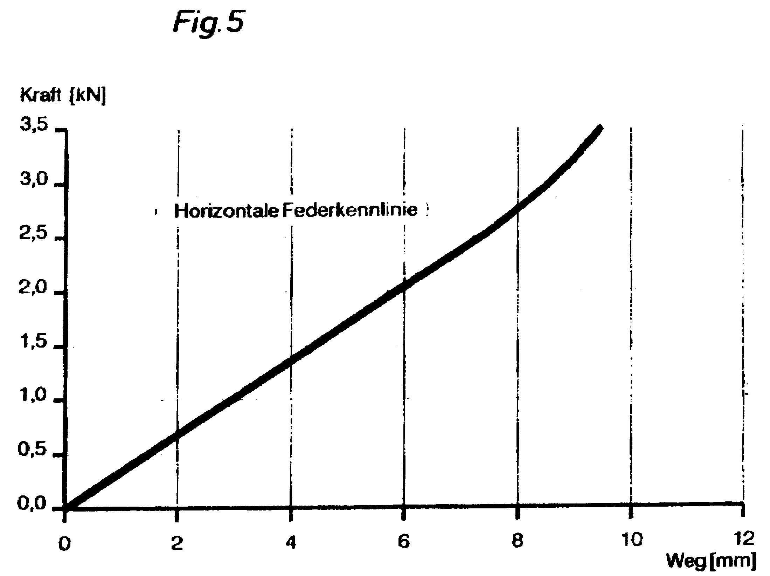

Die Figuren 4 und 5 zeigen in einem Diagramm aufgetragen den Deformationsgrad in Abhängigkeit der Krafteinwirkung des Isolators 4. In Figur 1 ist die Kennlinie des Isolators 4 bei einer vertikalen Kraftbeaufschlagung dargestellt. Deutlich erkennbar ist die progressive, "weiche" Charakteristik, die einen Kennlinienverlauf darstellt, bei der 50 Prozent des Deformationsweges bereits mit weniger als 25 Prozent der maximal zulässigen Krafteinwirkung erzielt wird.

In Figur 3 ist gezeigt, daß die Lagerung 1 an den Ecken der quadratisch ausgebildeten Befestigungsplatte 7 Durchgangslöcher 19 für die Befestigung des Isolators 4 an dem Fahrgestell aufweist.

Der Figur 5 ist der Kennlinienverlauf des Isolators 4 entnehmbar für eine Querkraftbeaufschlagung, die beim Ackerschleppereinsatz insbesondere durch das grobstollige Profil der Reifen verursacht wird. Für eine solche Belastungsrichtung zeigt der Isolator 4 einen linearen Anstieg des Deformationsweges in Abhängigkeit der eingeleiteten Kraft.

### Wirkungsweise der Kabinenlagerung:

Durch die Verformung des Isolators 4 im eingebauten, unbelasteten Zustand (siehe Fig. 1) bilden sich zwei Luftspalte 3, 6 mit einem zueinander unterschiedlichen Maß. Der größere Luftspalt 3, der sich bildet zwischen dem Isolator 4 und der Lagerplatte 5, verkleinert sich mit Zunahme der vertikalen Kraft in Richtung des mit "F" bezeichneten Pfeils. Aufgrund der mit der Verringerung des Luftspalts verbundenen größeren Verformungsarbeit ergibt sich eine gewünschte progressive Kennlinie für die Deformation des Isolators 4, die über einen weiten Bereich einen relativ flachen Anstieg besitzt und im Anschlagbereich einen stark Anstieg aufweist. Die Blockierung der Dämpfung wird erreicht, wenn die Lagerplatte 5 den Isolator 4 umfassend umschließt. Die Anschlagscheibe 12, deren Außendurchmesser den Innendurchmesser der Befestigungsplatte 7 übersteigt, besitzt neben der stützenden Wirkung des Unterteils 22 vom Isolator 4 weiter die Aufgabe, bei einer vertikalen Krafteinleitung in das Lager 1 entgegengesetzt der Pfeilrichtung "F" bis zur Überbrückung des Luftspaltes 6 eine ebenfalls weiche Kennlinie für den Isolator 4 zu bewirken und außerdem bei einer Extrembelastung - z.B. Überschlag des Fahrzeugs - ein Ausreißen der Schraubverbindung aus dem Isolator zu vermeiden.

Durch das Abrollen der grobstolligen Reifen erfährt die Lagerung eine Queranregung, die der Isolator 4 im eingebauten Zustand aufgrund der in dieser Richtung wirkenden geringen Dämpfungswerte vorteilhaft isoliert.

Mit der Lagerung ist somit eine Federcharakteristik erzielbar, die dem typischen Ackerschleppereinsatz angepaßt ist und für die Kabine über einen definierten Bereich eine weiche bzw. relativ harte Lagerung ergibt und zwar abhängig von der Anregungsrichtung. Durch die Lagerung werden alle bei Ackerschleppern aufkommenden Anregungen, die auf die Fahrerkabine einwirken, optimal gedämpft mit dem Vorteil einer Erhöhung des Fahrkomforts für die Bedienungsperson.

## Patentansprüche

1. Elastische Lagerung (1) für die Fahrerkabine eines land- oder bauwirtschaftlichen Fahrzeuges, insbesondere eines landwirtschaftlichen Traktors, welche zwischen der Kabine und dem Fahrzeugrumpf bzw. Fahrgestell eingesetzt ist und ein Dämpfungsglied aufweist, wobei die Lagerung (1) als Dämpfungsglied einen aus elastischem Material bestehenden Isolator (4) vorsieht, der als rotationssymmetrisches Bauteil in Form eines Tellers derart ausgebildet ist, daß der Isolator (4) einen Axialversatz aufweist, der aus einem im Mittenbereich des Isolators (4) ringförmigen Oberteil (23) besteht, der gegenüber einem radial äußeren ringförmigen Unterteil (22) des Isolators (4) in axialer Richtung versetzt angeordnet ist, und zur Krafteinleitung und Kraftübertragung je eine Metalleinfassung in der Mitte und am Rand des Isolators (4) vorgesehen ist, wobei im eingebauten, unbelasteten Zustand der Isolator (4) mit einer Anlagefläche (30) an einer Stirnseite am Oberteil (23) an einer Lagerplatte (5) und mit einer Anlagefläche (29) an einer hierzu gegenüberliegenden Stirnseite am Unterteil (22) an einer Anschlagscheibe (12) örtlich anliegt, und wobei die am Rand des Isolators (4) vorgesehene Metalleinfassung als Befestigungsplatte (7) ausgebildet ist, die sich in radialer Richtung des Isolators (4) zwischen der Anschlagscheibe (12) und der Lagerplatte (5) erstreckt,
*dadurch gekennzeichnet*, daß die Anlage des Oberteiles (23) an der Lagerplatte (5) und die Anlage des Unterteiles (22) an der Anschlagscheibe (12) jeweils in Richtung Befestigungsplatte (7) derart unterschiedlich verläuft, daß im eingebauten, unbelasteten Zustand jede der beiden Anlageflächen (29, 30) in einen sich radial bis zur Außenumfangsfläche des Isolators (4) hin erstreckenden Luftspalt (3, 6) übergeht, der sich zur jeweiligen radial innenliegenden Anlagefläche (29, 30) hin verjüngt und die beiden Luftspalte (3, 6) zueinander eine unterschiedliche Spaltbreite aufweisen, wobei die Lagerplatte (5) derart schalenförmig ausgebildet ist, daß sie im Mittenbereich des Isolators (4) eben ausgebildet ist und in der Randzone eine Abwinkelung (24) zum Isolator (49) aufweist.

2. Elastische Lagerung (1) nach Anspruch 1,
*dadurch gekennzeichnet*, daß der Isolator (4) als mittige Metalleinfassung eine zentrisch angeordnete Buchse (16) aufweist, die mit dem Isolator (4) verbunden ist.

3. Elastische Lagerung (1) nach Anspruch 1 oder Anspruch 2,
*dadurch gekennzeichnet*, daß die Übergänge des Unterteiles (22) zum Oberteil (23) durch die Radien (17, 18 bzw. 18, 27) stark gerundet verlaufen.

4. Elastische Lagerung (1) nach einem der Ansprüche 2 oder 3,
*dadurch gekennzeichnet*, daß beidseitig im Übergangsbereich zwischen der Buchse (16) und dem Isolator (4) ein umlaufender Radius (27) vorgesehen ist.

5. Elastische Lagerung (1) nach einem der vorhergehenden Ansprüche,
*dadurch gekennzeichnet*, daß im eingebauten Zustand der Lagerung (1) und belastet durch das statische Eigengewicht der Fahrerkabine der der Lagerplatte (5) zugeordnete Luftspalt (3) einen Wert von 3 bis 4 mm erreicht und der der Anschlagscheibe (12) zugeordnete Luftspalt (6) ein Maß von 2 bis 3 mm besitzt.

6. Elastische Lagerung (1) nach einem der vorhergehenden Ansprüche,
*dadurch gekennzeichnet*, daß der Isolator (4) aus Naturkautschuk gebildet ist mit einer Shore-Härte von 40 +/- 5 ShA.

7. Elastische Lagerung (1) nach einem der vorhergehenden Ansprüche,
*dadurch gekennzeichnet*, daß die Anschlagscheibe (12) einen Außendurchmesser besitzt, der größer ist als der Innendurchmesser (21) der Befestigungsplatte (7) und die Anschlagscheibe (12) auf der zum Isolator (4) gerichteten Seite im Außenbereich eine Anfassung (25) besitzt.

8. Elastische Lagerung (1) nach einem der Ansprüche 2 bis 7,
*dadurch gekennzeichnet*, daß im eingebauten Zustand die Buchse (16) des Isolators (4) sowie die Anschlagscheibe (12) und die Lagerplatte (5) starr mit der Fahrerkabine über eine Zentralverschraubung verbunden sind.

9. Elastische Lagerung (1) nach einem der vorhergehenden Ansprüche,
*dadurch gekennzeichnet*, daß im eingebauten Zustand die Befestigungsplatte (7) mit dem Fahrgestell (10) unmittelbar bzw. durch Zwischenschaltung einer Auflage (11) mittelbar durch Verschraubungen starr miteinander verbunden ist.

10. Elastische Lagerung (1) nach einem der vorhergehenden Ansprüche,
*dadurch gekennzeichnet*, daß die Lagerung (1) an den Ecken der quadratisch ausgebildeten Befestigungsplatte (7) Durchgangslöcher (19) aufweist für die Befestigung des Isolators (4) an dem Fahrgestell.

## Claims

1. A resilient bearing (1) for the driver's cab of an agricultural or construction vehicle, especially an agricultural tractor, the bearing being inserted between the cab and the vehicle body or chassis and comprising a shock-absorbing element, the shock- absorbing element in the bearing (1) being an insulator (4) made of resilient material and in the form of a rotationally-symmetrical plate-shaped component, wherein the insulator (4) has an axial offset comprising an annular upper part (23) in the central region of the insulator (4) and offset in the axial direction relative to a radially outer annular lower part (22) of the insulator (4), and, for the purpose of introducing and transmitting force, a metal border or insert is provided in the middle and at the edge of the insulator (4) and, in the installed unloaded state, a bearing surface (30) of the insulator bears at one end face on the top part (23) against a bearing plate (5), and a bearing surface (29) bears locally against an opposite end face on the bottom part (22) at a bearing retainer (12), the metal border or insert provided at the edge of the insulator (4) being in the form of a securing plate (7) which extends in the radial direction of the insulator (4) between the bearing retainer (12) and the bearing plate (5), characterised in that the abutment of the upper part (23) against the bearing plate (5) and the abutment of the lower part (22) against the bearing retainer (12), respectively, in the direction of the securing plate (7), differ in that, in the installed unloaded state each of the two bearing surfaces (29, 30) merges or leads into an air gap (3, 6) which extends radially up to the outer peripheral surface of the insulator (4) and tapers towards the respective radially inner bearing surface (29, 30), and the two air gaps (3, 6) differ in width, the bearing plate (5) being dish-shaped, i.e. flat in the central region of the insulator (4) and bent (24) towards the insulator (49) in the edge zone.

2. A resilient bearing (1) according to claim 1, characterised in that the insulator (4) has a central metal border or insert in the form of a central bush (16) connected to the insulator (4).

3. A resilient bearing (1) according to claim 1 or 2, characterised in that the transitions from the lower part (22) to the upper part (23) are strongly rounded by the radii (17, 18 and 18, 27 respectively).

4. A resilient bearing (1) according to claim 2 or 3, characterised in that a peripheral radius (27) is provided at both sides in the transition region between the bush (16) and the insulator (4).

5. A resilient bearing (1) according to any preceding claim, characterised in that, when the bearing (1) is installed and loaded by the dead weight of the driver's cab, the air gap (3) associated with the bearing plate (5) has a dimension of 3 to 4 mm and the air gap (6) associated with the bearing retainer (12) measures 2 to 3 mm.

6. A resilient bearing (1) according to any preceding claim, characterised in that the insulator (4) is made of natural rubber and has a Shore hardness of 40 +/- 5 ShA.

7. A resilient bearing (1) according to any preceding claim, characterised in that the bearing retainer (12) has an outer diameter greater than the inner diameter (21) of the securing plate (7), and the bearing retainer (12) has a chamfer (25) in the outer region on the side facing the insulator (4).

8. A resilient bearing (1) according to any one of claims 2 to 7, characterised in that, in the installed state, the bush (16) of the insulator (4) and the bearing retainer (12) and the bearing plate (5) are rigidly connected to the driver's cab by a central screw.

9. A resilient bearing (1) according to any preceding claim, characterised in that, in the installed state, the securing plate (7) is rigidly connected to the chassis (10) by screws, either directly or with the interposition of a layer (11).

10. A resilient bearing (1) according to any preceding claim, characterised in that the bearing (1), at the corners of the square securing plate (7), has perforations (19) for securing the insulator (4) to the chassis.

## Revendications

1. Montage élastique (1) pour la cabine du conducteur d'un véhicule agricole ou d'un engin de travaux publics, en particulier d'un tracteur agricole, montage qui est inséré entre la cabine et la carcasse ou le châssis du véhicule et qui présente un organe d'amortissement, le montage (1) prévoyant comme organe d'amortissement un isolateur (4) réalisé en une matière élastique, isolateur qui est constitué en tant que pièce détachée symétrique de révolution sous la forme d'un plateau de telle façon que l'isolateur (4) présente un déport axial qui consiste en une partie supérieure (23) de forme annulaire dans la zone médiane de l'isolateur (4), partie qui est disposée de façon décalée dans le sens axial par rapport à une partie inférieure (22) de l'isolateur (4), extérieure radialement et de forme annulaire, et en ce qu'on prévoit pour l'introduction des forces et la transmission des forces respectivement un cadre métallique dans le milieu et sur le bord de l'isolateur (4), l'isolateur (4) quand il est en position montée, non chargée reposant à poste fixe par une surface d'appui (30) sur une face frontale sur la partie supérieure (23) sur une plaque de montage (5) et par une surface d'appui (29) sur une face frontale située en regard sur la partie inférieure (22) sur un disque de butée (12) et le cadre métallique prévu sur le bord de l'isolateur (4) étant constitué sous la forme d'une plaque de fixation (7), qui s'étend dans le sens radial de l'isolateur (4) entre le disque de butée (12) et la plaque de montage (5), montage élastique caractérisé en ce que l'appui de la partie supérieure (23) sur la plaque de montage (5) et l'appui de la partie inférieure (22) sur le disque de butée (12) s'étendent respectivement en direction de la plaque de fixation (7) d'une façon différente telle que, à l'état monté et non chargé, chacune des deux surfaces d'appui (29, 30) se transforme en un entrefer (3, 6) s'étendant radialement jusqu'à la surface périphérique extérieure de l'isolateur (4), entrefer qui va en se rétrécissant vers la surface d'appui (29, 30) se trouvant respectivement à l'intérieur radialement, et en ce que les deux entrefers (3, 6) présentent l'un par rapport à l'autre une largeur de fente différente, la plaque de montage (5) étant constituée en forme de cuvette de telle sorte qu'elle soit constituée dans la zone médiane de l'isolateur (4) de façon plane et présente sur les bords un angle de déflexion (24) vers l'isolateur (4).

2. Montage élastique (1) selon la revendication 1, caractérisé en ce que l'isolateur (4) présente comme cadre métallique médian une douille (16) disposée au centre, qui est reliée à l'isolateur (4).

3. Montage élastique (1) selon la revendication 1 ou la revendication 2, caractérisé en ce que les passages de la partie inférieure (22) vers la partie supérieure (23) s'étendent de façon fortement arrondie par les rayons (17, 18 ou 18, 27).

4. Montage élastique (1) selon l'une des revendications 2 ou 3, caractérisé en ce que des deux côtés dans la zone de passage entre la douille (16) et l'isolateur (4) un rayon (27) circulaire est prévu.

5. Montage élastique (1) selon l'une des revendications précédentes, caractérisé en ce que quand le montage est en place et chargé par le poids propre statique de la cabine du conducteur l'entrefer (3) associé à la plaque de montage (5) atteint une valeur de 3 à 4 mm et l'entrefer (6) associé au disque de butée (12) possède une dimension de 2 à 3 mm.

6. Montage élastique (1) selon l'une des revendications précédentes, caractérisé en ce que l'isolateur (4) est réalisé en caoutchouc naturel avec une dureté Shore de 40 +/- 5 ShA.

7. Montage élastique (1) selon l'une des revendications précédentes, caractérisé en ce que le disque de butée (12) possède un diamètre extérieur, qui est plus grand que le diamètre intérieure (21) de la plaque de fixation (7) et le disque de butée (12) possède un cadre (25) sur le côté dirigé vers l'isolateur (4) dans la zone extérieure.

8. Montage élastique (1) selon l'une des revendications 2 à 7, caractérisé en ce qu'en position montée la douille (16) de l'isolateur (4) ainsi que le disque de butée (12) et la plaque de montage (5) sont reliés rigidement avec la cabine du conducteur par l'intermédiaire d'un vissage central.

9. Montage élastique (1) selon l'une des revendications précédentes, caractérisé en ce qu'en position montée la plaque de fixation (7) est reliée directement au châssis du véhicule (10) ou par interposition d'un support indirectement par des vissages de façon rigide.

10. Montage élastique (1) selon l'une des revendications précédentes, caractérisé en ce que le montage (1) présente pour la fixation de l'isolateur (4) sur le châssis du véhicule des trous de passage (19) sur les angles de la plaque de fixation (7) constituée de façon carrée.
